# EUROPÄISCHE PATENTANMELDUNG

(11) **EP 1 332 929 A1**
(43) Veröffentlichungstag der Anmeldung: **06.08.2003**
(21) Anmeldenummer: 03090019.5
(22) Anmeldetag: 23.01.2003
(51) Int. Cl.: B60R 21/16

(54) **Schutzeinrichtung für Insassen von Kraftfahrzeugen**

(30) Priorität: 30.01.2002 DE 10204486
(71) Anmelder: TAKATA-PETRI (Ulm) GmbH, 89081 Ulm (DE)
(72) Erfinder: Aulbach, Alexander, 89073 Ulm (DE); Siegel, Wolfgang, 89567 Sontheim-Brenz (DE); Eckle, Jens, 89284 Plaffenhofen (DE)
(74) Vertreter: Baumgärtel, Gunnar, Dr.

(57) **Zusammenfassung**

Die Erfindung betrifft eine Schutzeinrichtung für Insassen von Kraftfahrzeugen unter Verwendung mindestens eines Sicherheits-Schultergurtes und mit mindestens einem Airbagmodul zum zusätzlichen seitlichen Schutz des Thorax- und Kopfbereiches der Insassen. Erfindungsgemäß ist ein Airbagmodul mit einem Airbag (3) vorgesehen, der einen Bereich für den Schutz des Thorax, nachfolgend Thoraxkammer (5) genannt, aufweist, der in seinem oberen Abschnitt, in dem auch der Schultergurt (4) verläuft, seine geringste Ausdehnung nach hinten hat. Weiter weist der Airbag (3) einen Bereich für den Schutz des Kopfes, nachfolgend Kopfkammer (6) genannt, auf, der sich im wesentlichen oberhalb des Schultergurtes (4) und weiter nach hinten erstreckt, als der obere Abschnitt der Thoraxkammer (5).

## Beschreibung

Die Erfindung betrifft eine Schutzeinrichtung für Insassen von Kraftfahrzeugen nach dem Oberbegriff des Anspruchs 1.

Für den Schutz der Insassen von Kraftfahrzeugen ist es bekannt, sowohl Sicherheitsgurte als auch Airbags zu verwenden. Es sind sowohl Front-Airbags für den Schutz des Insassen bei einem Frontalaufprall als auch Seitenairbags für den Schutz bei einem seitlichen Aufprall bekannt. Während ein Frontairbag bei seiner Entfaltung durch den Sicherheitsgurt nicht beeinflußt wird, können sich ein entfalteter Seitenairbag, der sowohl für den Schutz des Thorax als auch für den Schutz des Kopfes vorgesehen ist, und der Sicherheitsgurt gegenseitig beeinträchtigen.

Zur Vermeidung dieser Beeinträchtigung ist aus dem EP 0 844 948 ein Schutzsystem mit einer dem Thoraxbereich zugeordneten ersten Kammer und einer dem Kopfbereich zugeordneten zweiten Kammer bekannt, wobei in der dem Kopfbereich zugeordneten zweiten Kammer ein Einschnitt vorgesehen ist, durch den der Sicherheitsgurt die Konturen der mit Gas befüllten zweiten Kammer durchtritt. Durch diesen Einschnitt in der Kopfkammer soll die gegenseitige Beeinträchtigung des aufgeblasenen Airbags und des Sicherheitsgurtes vermieden werden.

Dieses Schutzsystem weist aber Nachteile auf. So wird durch einen schmalen, also schlitzförmigen Einschnitt im Kopfbereich nicht ausgeschlossen, daß sich Airbag und Sicherheitsgurt bei der Entfaltung des Airbags gegenseitig beeinflussen. Bei einem breiteren Einschnitt besteht die Gefahr, daß der Kopf unzureichend geschützt wird. Die Gefahr wird noch dadurch erhöht, daß die durch den Einschnitt getrennten Abschnitte der Kopfkammer durch den Kopf auseinander gedrückt werden.

Der Erfindung liegt die Aufgabe zugrunde, bei einem Airbag zum Schutz des Thorax und des Kopfes eine gegenseitige Beeinträchtigung des Airbags, insbesondere des Bereichs für den Schutz des Kopfes und des Sicherheitsgurtes zumindest zu verringern, ohne daß die Schutzwirkung des Airbags beeinträchtigt wird.

Erfindungsgemäß wird das durch die Merkmale des Anspruchs 1 erreicht.

Bei einer Schutzeinrichtung für Insassen von Kraftfahrzeugen unter Verwendung mindestens eines Sicherheits-Schultergurtes und mit mindestens einem Airbagmodul zum zusätzlichen seitlichen Schutz des Thorax- und Kopfbereiches der Insassen, ist erfindungsgemäß ein Aibagmodul mit einem Airbag vorgesehen, der einen Bereich für den Schutz des Thorax, nachfolgend Thoraxkammer genannt, aufweist, der in seinem oberen Abschnitt, in dem der Schultergurt verläuft, seine geringste Ausdehnung nach hinten hat und daß der Airbag einen Bereich für den Schutz des Kopfes, nachfolgend Kopfkammer genannt, aufweist, der sich im wesentlichen oberhalb des Schultergurtes und weiter nach hinten erstreckt, als der obere Abschnitt der Thoraxkammer.

Die Anordnung weist den Vorteil auf, daß die Kopfkammer im entfalteten Stadium mit dem Schultergurt kaum in Berührung kommt. Da sich die Kopfkammer weiter nach hinten erstreckt als der Abschnitt der Thoraxkammer, über den der Schultergurt verläuft, kann der Gurt bei der Entfaltung des Airbags nicht abgestreift werden. Weiterhin ist dadurch der Schutz des Kopfes auch in der hintersten Sitzstellung jedes Fahrzeugtyps gewährleistet. Die Abmessung der Kopfkammer kann problemlos auch unterschiedlichen hintersten Sitzstellungen bei unterschiedlichen Fahrzeugtypen angepaßt werden. Da die Kopfkammer keinen Einschnitt aufweist, ist ein sicherer Schutz des Kopfes gewährleistet. Dadurch daß die Thoraxkammer in ihrem obersten Bereich, in dem der Schultergurt verläuft, ihre geringste Ausdehnung nach hinten aufweist, beeinflussen sich der Schultergurt und die Thoraxkammer kaum.

Es ist zweckmäßig, daß die Kopfkammer schneckenförmig abgenäht ist, wobei sich die Naht, die die Schneckenform erzeugt, vorzugsweise vom der hinteren Abschnitt der Randnaht der Kopfkammer ausgehend in die Kopfkammer hinein erstreckt. Es ist weiter zweckmäßig, daß der Gaseinlaß für die Thorax- und die Kopfkammer im unteren Teil der Thoraxkammer vorgesehen ist. Dadurch wird erreicht, daß sich im Crashfall zunächst die Thoraxkammer, anschließend der vordere Teil der Kopfkammer und danach der hintere Teil der Kopfkammer entfaltet. Dabei entfaltet sich der Airbag um den Schultergurt herum.

In einer bevorzugten Ausführungsform endet der Abnäher, der die Schneckenform der Kopfkammer erzeugt, in einem kurvenförmigen, in sich geschlossenen Abnäher, der vorzugsweise etwa im Zentrum der Kopfkammer liegt. Die Entfaltung der Kopfkammer erfolgt dann um diesen in sich geschlossenen Abnäher herum vom vorderen Teil zum hinteren Teil der Kopfkammer.

Der kurvenförmige in sich geschlossene Abnäher kann zum Beispiel kreis- oder ellipsenförmig sein. Andere Formen sind möglich. Für den Schutz des Kopfes ist vorzugsweise der hintere Teil der Kopfkammer vorgesehen.

In einer Ausführungsform verjüngt sich die Thoraxkammer auf ihrer hinteren Seite von unten her bis zur Kopfkammer kontinuierlich.

In einer weiteren Ausführungsform verjüngt sich die Thoraxkammer an ihrer hinteren Seite im unteren Abschnitt und anschließend verläuft sie zumindest annähernd parallel zur Vorderseite bis zur Kopfkammer.

In einer dritten Ausführungsform verjüngt sich die Thoraxkammer an ihrer hinteren Seite in ihrem unteren Abschnitt kontinuierlich und anschließend vergrößert sie sich zur Kopfkammer hin wieder kontinuierlich.

Der Airbag kann sowohl am Sitz, an der Sitzlehne, an einer Fahrzeugsäule oder einer Fahrzeugtür befestigt sein.

Die Erfindung soll in Ausführungsbeispielen anhand von Zeichnungen erläuterrt werden. Es zeigen:
- Fig. 1: eine Seitenansicht der Fahrerseite mit einem entfalteten Airbag und und dem Verlauf des Schultergurtes;
- Fig. 2: eine erste Ausführungsform des Airbags mit kontinuierlich verjüngter hinterer Seite;
- Fig. 3: eine zweite Ausführungsform des Airbags mit annähernd parallel zur vorderen Seite verlaufenden hinteren Seite;
- Fig. 4: eine dritte Ausfühurngsform des Airbags mit einer ovalen hinteren Seite;
- Fig. 5: eine Ausführungsform des Airbags mit ovalem Abnäher in der Kopfkammer;
- Fig 6: einen Beifahrersitz von vorn mit entfaltetem Airbag.

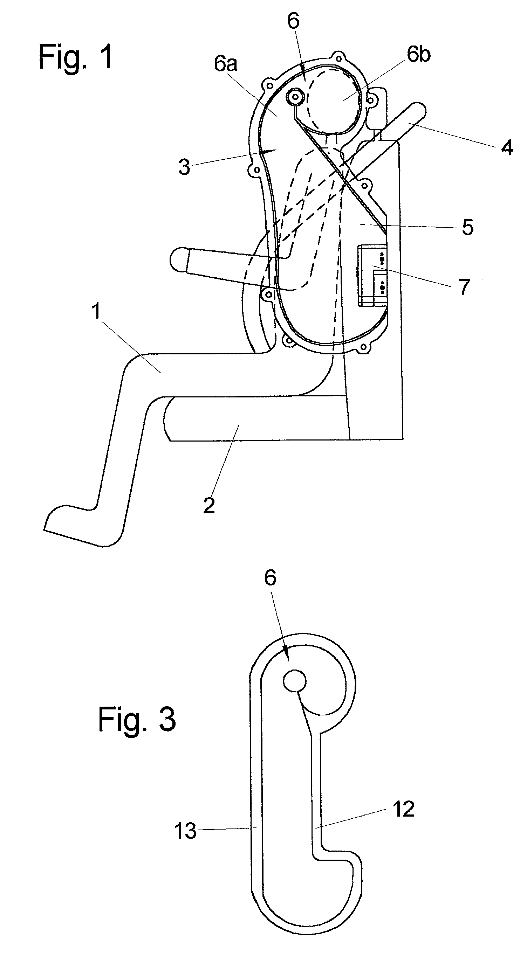

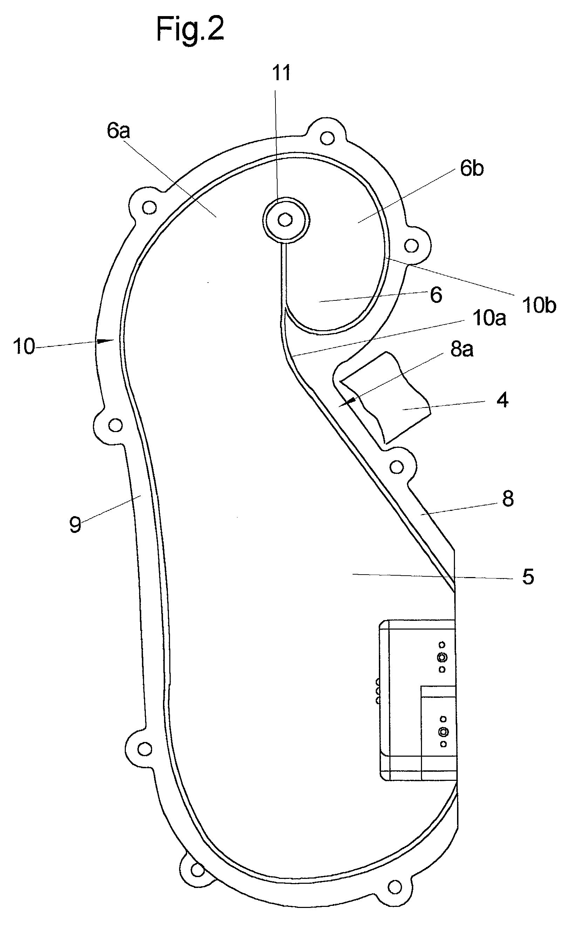

Die Seitenansicht der Fig. 1 zeigt einen Insassen zusammen mit dem entfalteten Airbag und dem Sicherheitsgurt von der Einstiegsseite des Fahrers aus gesehen. Der Fahrer 1 ist auf seinem Sitz 2 durch einen Airbag 3 und einen Sicherheitsgurt 4 geschützt. Der Airbag 3 ist in seinem entfalteten Stadium dargestellt. Er weist eine Thoraxkammer 5 und eine Kopfkammer 6 auf. Die Thoraxkammer weist in ihrem unteren Teil einen Gaseinlaß auf, wobei der zugehörige Gasgenerator 7 mit dem Airbag 3 bei diesem Ausführungsbeispiel an der Lehne des Sitzes 2 befestigt ist. Wie insbesondere aus der Fig. 2 ersichtlich ist, verjüngt sich die hintere Seite 8 der Thoraxkammer 5 kontinuierlich gegenüber der vorderen Seite 9 bis zur Kopfkammer 6. Der Sicherheitsgurt 4 verläuft an der Stelle der Thoraxkammer über den Airbag, an der sich die Thoraxkammer am geringsten nach hinten ausdehnt.

Der in den Figuren 1 und 2 dargestellte Airbag besteht aus zwei Teilen, von denen in diesen Figuren nur das Teil sichtbar ist, das der Fahrzeugtür zugekehrt ist. Die Teile sind durch eine Randnaht 10 miteinander verbunden. Wie insbesondere aus der Fig. 2 ersichtlich ist, enden an der hinteren Seite des Airbags 3 ein Nahtabschnitt 10a der Thoraxkammer 5 und ein Nahtabschnitt 10b der Kopfkammer 6 an einem kreisförmigen Abnäher 11, der etwa im Zentrum der Kopfkammer 6 vorgesehen ist. Der Nahtabschnitt 10b verläuft setzt sich in einem bogenförmigen Abschnitt 10c so fort, daß die Kopfkammer 6 Schneckenform aufweist. Durch die Nahtabschnitte 10a und 10b sowie durch den Abnäher 11 wird die Kopfkammer 6 in einen vorderen Abschnitt 6a und in einen hinteren Abschnitt 6b unterteilt.

Im Crashfall wird zunächst die Thoraxkammer 5 von unten nach oben entfaltet. Anschließend entfaltet sich der vordere Abschnitt 6a der Kopfkammer. Zum Schluß füllt sich der hintere Abschnitt 6b der Kopfkammer 6 um den kreisförmigen Abnäher 11 herum mit Gas. Wie aus der Fig. 2 ersichtlich ist, entfaltet sich der Airbag um den Sicherheitsgurt 4 herum. Eine gegenseitige Beeinträchtigung von Gurt und insbesondere der Kopfkammer 6 ist weitestgehend ausgeschlossen. Wie aus der Fig. 1 erkennbar ist, ist vor allem der hintere Abschnitt 6b der Kopfkammer 6 für den Schutz des Kopfes bestimmt.

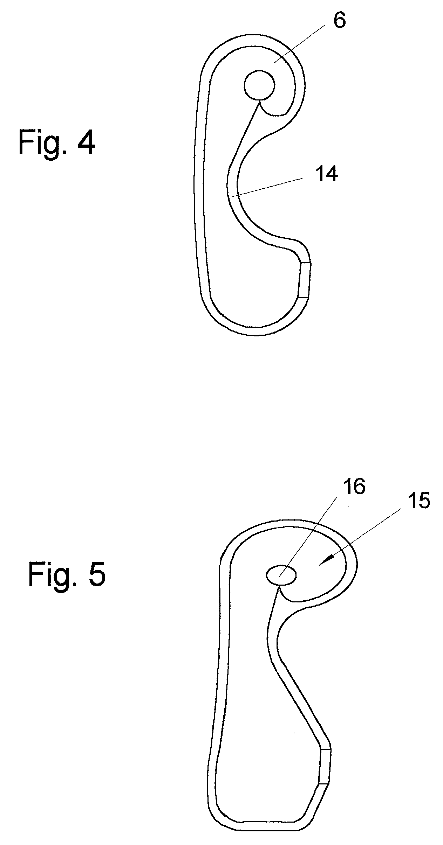

In der Fig. 3 ist eine weitere Ausführungsform des Airbags dargestellt. Bei diesem Airbag verjüngt sich die hintere Seite 12 der Thoraxkammer 5 im unteren Abschnitt und anschließend verläuft sie zumindest annähernd parallel zur vorderen Seite 13 bis zur Kopfkammer 6.

Beim Ausführungsbeispiel der Fig. 4 weist der Airbag eine ovale hintere Seite 14 auf, wodurch das Ziel der geringeren gegenseitigen Beeinträchtigung von Gurt und Airbag ebenfalls erreicht wird.

Beim Ausführungsbeispiel der Fig. 5 erstreckt sich eine Kopfkammer 15 weiter nach hinten als bei den vorhergehenden Ausführungsbeispielen. In diesem Ausführungsbeispiel ist ein ellipsenförmiger Abnäher 16 vorgesehen. Es ist natürlich auch möglich, bei dieser verlängerten Kopfkammer 15 ebenfalls einen kreisförmigen Abnäher vorzusehen. Es ist ersichtlich, daß die mögliche variable Ausdehnung der Kopfkammer nach hinten bei dieser erfindungsgemäßen Airbagform leicht unterschiedlichen Fahrzeugen mit unterschiedlichen hintersten Stellungen des Sitzes angepaßt werden kann.

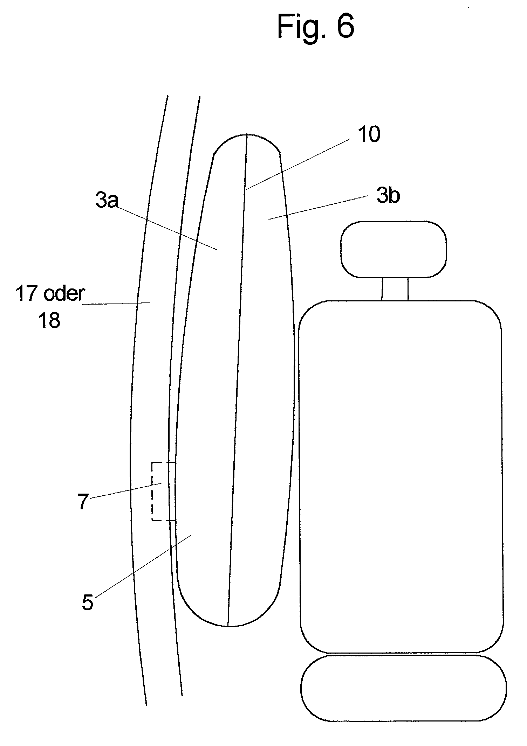

Im Ausführungsbeispiel der Fig. 6 ist die Anbindung des Airbags 3 an die Fahrzeugtür 17 bzw an die B-Säule 18 der Beifahrerseite dargestellt. Dabei ist der Gasgenerator 7 ebenfalls im unteren Teil der Thoraxkammer 5 an den Airbag angeschlossen. Aus dieser Figur ist auch erkennbar, wie es weiter oben beschrieben wurde, daß der Airbag aus zwei Teilen 3a, 3b besteht, die durch die Randnaht 10 miteinander verbunden sind.

## Patentansprüche

1. Schutzeinrichtung für Insassen von Kraftfahrzeugen unter Verwendung mindestens eines Sicherheits-Schultergurtes und mit mindestens einem Airbagmodul zum zusätzlichen seitlichen Schutz des Thorax- und Kopfbereiches der Insassen,
**dadurch gekennzeichnet,**
**daß** ein Airbagmodul mit einem Airbag (3) vorgesehen ist, der einen Bereich für den Schutz des Thorax, nachfolgend Thoraxkammer (5) genannt, aufweist, der in seinem oberen Abschnitt, in dem auch der Schultergurt (4) verläuft, seine geringste Ausdehnung nach hinten hat und daß der Airbag (3) einen Bereich für den Schutz des Kopfes, nachfolgend Kopfkammer (6) genannt, aufweist, der sich im wesentlichen oberhalb des Schultergurtes (4) und weiter nach hinten erstreckt, als der obere Abschnitt (8a) der Thoraxkammer (5).

2. Schutzeinrichtung nach Anspruch 1 , **dadurch gekennzeichnet, daß** die Kopfkammer (6) schneckenförmig abgenäht ist.

3. Schutzeinrichtung nach Anspruch 2, **dadurch gekennzeichnet, daß** sich die Naht (10c), die die Schnekkenform der Kopfkammer (6) erzeugt, vom hinteren Abschnitt (10b) der Randnaht der Kopfkammer (6) ausgehend in die Kopfkammer (6) hinein erstreckt.

4. Schutzeinrichtung nach Anspruch 2 oder 3, **dadurch gekennzeichnet, daß** die Naht (10c), die die Schnekkenform erzeugt, in einem kurvenförmigen, in sich geschlossenen Abnäher (11, 16) endet.

5. Schutzeinrichtung nach Anspruch 4, **dadurch gekennzeichnet, daß** der kurvenförmige in sich geschlossene Abnäher (11, 16) etwa im Zentrum der Kopfkammer liegt.

6. Schutzeinrichtung nach mindestens einem der Ansprüche 4 und 5, **dadurch gekennzeichnet, daß** der kurvenförmige in sich geschlossene Abnäher Kreisform (11) oder Ellipsenform (16) aufweist.

7. Schutzeinrichtung nach mindestens einem der Ansprüche 2 bis 6, **dadurch gekennzeichnet, daß** ein hinterer Teil (6b) der Kopfkammer (6) für den Schutz des Kopfes vorgesehen ist.

8. Schutzeinrichtung nach mindestens einem der vorhergehenden Ansprüche, **dadurch gekennzeichnet, daß** sich die Thoraxkammer (5) auf ihrer hinteren Seite (8) von unten her bis zur Kopfkammer (6) kontinuierlich verjüngt.

9. Schutzeinrichtung nach mindestens einem der Ansprüche 1 bis 8, **dadurch gekennzeichnet, daß** sich die Thoraxkammer (5) an ihrer hinteren Seite (12) im unteren Abschnitt verjüngt und anschließend zumindest annähernd parallel zur Vorderseite (13) bis zur Kopfkammer (6) verläuft.

10. Schutzeinrichtung nach mindestens einem der Ansprüche 1 bis 8, **dadurch gekennzeichnet, daß** sich die Thoraxkammer (5) an ihrer hinteren Seite (14) in ihrem unteren Abschnitt kontinuierlich verjüngt und sich anschließend zur Kopfkammer (6) hin wieder kontinuierlich vergrößert.

11. Schutzeinrichtung nach mindestens einem der vorhergehenden Ansprüche, **dadurch gekennzeichnet, daß** der Gaseinlaß (7) für die Thorax- und die Kopfkammer im unteren Teil der Thoraxkammer (5) vorgesehen ist.

12. Schutzeinrichtung nach mindestens einem der vorhergehenden Ansprüche, **dadurch gekennzeichnet, daß** der Airbag aus zwei Teilen (3a, 3b) besteht, die durch einen Randnaht (10) miteinander verbunden sind.

13. Schutzeinrichtung nach mindestens einem der vorhergehenden Ansprüche, **dadurch gekennzeichnet, daß** der Airbag (3) am Sitz (2), an der Sitzlehne, an einer Fahrzeugsäule (18) oder einer Fahrzeugtür (17) befestigt ist.
